# EUROPÄISCHE PATENTSCHRIFT

(11) **EP 2 552 758 B1**
(45) Veröffentlichungstag und Bekanntmachung des Hinweises auf die Patenterteilung: **02.07.2014**
(21) Anmeldenummer: 11711329.0
(22) Anmeldetag: 29.03.2011
(51) Int. Cl.: B60T 11/16, B60T 11/18, B60T 11/20, B60T 11/224, B60T 11/228

(54) **BREMSANLAGE FÜR KRAFTFAHRZEUGE**
BRAKE SYSTEM FOR MOTOR VEHICLES
SYSTÈME DE FREINAGE POUR VÉHICULES AUTOMOBILES

(30) Priorität: 07.04.2010 DE 102010003689; 29.03.2010 DE 102010003380
(43) Veröffentlichungstag der Anmeldung: 06.02.2013
(73) Patentinhaber: Continental Teves AG & Co. oHG, 60488 Frankfurt (DE)
(72) Erfinder: SCHIEL, Lothar, 65719 Hofheim (DE)
(86) Internationale Anmeldenummer: PCT/EP2011/054815
(87) Internationale Veröffentlichungsnummer: WO 2011/120962

(56) Entgegenhaltungen:
- EP-A2- 1 878 630
- WO-A1-01/72567
- DE-A1- 4 240 518
- DE-A1-102007 049 620
- DE-B- 1 195 185
- FR-A1- 2 464 169
- GB-A- 2 179 715
- US-A1- 2002 124 563

## Beschreibung

Die Erfindung betrifft eine Bremsanlage für Kraftfahrzeuge vom Typ "Brake-by-Wire" mit einer Betätigungseinheit umfassend einen mittels eines Bremspedals betätigbaren Hauptbremszylinder mit einem Gehäuse und einem in dem Gehäuse verschiebbar angeordneten Kolben, welcher zusammen mit dem Gehäuse einen Druckraum begrenzt, an dem Radbremsen angeschlossen sind, einen drucklosen Druckmittelvorratsbehälter, einem mit dem Hauptbremszylinder zusammenwirkenden hydraulisch betätigbaren Wegsimulator mit einem mittels einer Feder positionierten Simulatorkolben, der einerseits einen die Feder aufnehmenden Simulatorraum und andererseits eine mit dem Druckraum des Hauptbremszylinders in Verbindung stehende Simulatorkammer begrenzt, wobei der Wegsimulator, insbesondere in einer Betriebsart "Brake-by-Wire", dem Fahrzeugführer ein angenehmes Pedalgefühl vermittelt, wobei der Hauptbremszylinder in einer Rückfallebene durch den Fahrzeugführer rein muskelkraftbetrieben betätigt ist, einer elektrisch steuerbaren, pneumatischen, elektrischen bzw. elektrohydraulischen Druckbereitstellungseinheit zur Beaufschlagung der Radbremsen mit Druck, einer Druckregelventilanordnung zur Regelung und/oder Steuerung eines an einer Radbremse eingesteuerten Radbremsdruckes und einer elektronischen Steuer- und Regeleinheit, welche die Betätigungseinheit und/oder die Druckregelventilanordnung steuert oder regelt.

In der Kraftfahrzeugtechnik finden "Brake-by-Wire"-Bremssysteme eine immer größere Verbreitung. Eine gattungsgemäße elektrohydraulische Bremsanlage für Kraftfahrzeuge vom Typ "Brake-by-Wire" ist beispielsweise aus der DE 102 35 288 A1 sowie aus der DE 10 2007 049 620 A1 bekannt.

In Brake-by-Wire-Bremssystemen wird der erforderliche Bremsdruck bei Betriebsbremsungen ohne direkte Beteiligung des Fahrzeugführers von der pneumatischen, elektrischen bzw. elektrohydraulischen Betätigungseinheit bereitgestellt. Dem Fahrzeugführer wird durch den sogenannten Wegsimulator das von herkömmlichen Bremssystemen bekannte Pedalgefühl vermittelt.

Bei Ausfall der by-Wire-Einheit bzw. der Elektrik / Elektronik wird das Fahrzeug durch den hydraulischen Druck abgebremst, den der Fahrzeugführer ausschließlich mit Muskelkraft im hydraulischen Hauptbremszylinder (unverstärkte Rückfallebene) erzeugt. Ferner muss, wenn die Bremsanlage z.B. durch Ausfall der Fremdenergie in die muskelkraftbetriebene Rückfallebene wechselt, der Wegsimulator von der Pedalbetätigung abgetrennt werden, denn der Volumenverbraucher "Wegsimulator" führt sonst zu einem erheblich verlängerten Pedalweg und kann zu einer unzureichenden Fahrzeugverzögerung führen. Die Abschaltung des Simulators muss aus diesem Grund vom System selbst überwachbar sein.

Der vorliegenden Erfindung liegt die Aufgabe zugrunde, eine Bremsanlage für Kraftfahrzeuge vom Typ "Brake-by-Wire" bereitzustellen, die es ermöglicht, in der unverstärkten Rückfallebene trotz eines nicht abschaltbaren Wegsimulators und der gesetzlichen Pedalkraftlimitierung von 500N auch große und schwere Fahrzeuge mit einem ergonomisch optimierten Pedalweg bis zur gesetzlich vorgeschriebenen Vollverzögerung abbremsen zu können.

Diese Aufgabe wird erfindungsgemäß dadurch gelöst, dass der Kolben des Hauptbremszylinders als Stufenkolben mit mindestens zwei unterschiedlich großen hydraulischen Wirkflächen ausgebildet ist, wobei dem Druckraum eine erste, kleine Wirkfläche und einem Füllraum ein zweite, große Wirkfläche zugeordnet ist, und wobei der Füllraum in der Betriebsart "Brake-by-Wire" über eine Druckmittelleitung mit dem Druckmittelbehälter in Verbindung steht, so dass in der Betriebsart "Brake-by-Wire" die erste, kleine Wirkfläche wirksam ist, und in der Rückfallebene nach Überwindung eines Schließweges die zweite, große hydraulische Wirkfläche wirksam ist und eine Umschaltung der Wirkflächen in Abhängigkeit von einem hydraulischen Druck in dem Druckraum bzw. der Pedalkraft erfolgt.

Die Kolbenstufe mit einer größeren Wirkfläche wird im Normalbetrieb, d.h. in der Betriebsart "Brake-by-Wire" stets mit dem Druckmittelbehälter verbunden und ist somit im Normalbetrieb der Bremsanlage unwirksam. Diese sicherheitsrelevante Verbindung kann vom System bei jeder Pedalbetätigung auf ihre Funktionstüchtigkeit geprüft werden.

In der Rückfallebene wird diese Verbindung unterbrochen und der Hauptbremszylinder arbeitet bis zu einem konstruktiv vorher bestimmten Umschaltpunkt mit der größeren Wirkfläche. Im Umschaltpunkt, beim Erreichen des Umschaltdruckes wird die große Wirkfläche wieder mit dem Druckmittelbehälter verbunden und der weitere Druckaufbau wird nur über die kleinere Wirkfläche des Hauptbremszylinders fortgesetzt.

Damit wird nach Überwindung des auch im Normalbetrieb (Betriebsart "Brake-by-Wire") vorhandenen Schließweges am Kolben sofort und stetig Bremsdruck in den Radbremskreisen aufgebaut. Die vom Fahrzeugführer eingebrachte Betätigungskraft wird direkt und verlustfrei zum Druckaufbau in den Bremskreisen verwendet.

Weitere Merkmale, Vorteile und Anwendungsmöglichkeiten der Erfindung gehen aus den Unteransprüchen und der nachfolgenden Beschreibung eines Ausführungsbeispiels sowie anhand der Zeichnung hervor.

Es zeigt schematisch:
- Fig. 1: eine Betätigungseinheit eines Ausführungsbeispiel einer erfindungsgemäßen Bremsanlage;
- Fig. 2: eine beispielhafte Darstellung einer Volumen-Druck-Kennlinie der erfindungsgemäßen Bremsanlage und
- Fig. 3: eine beispielhafte Darstellung einer Pedalweg-Pedalkraft-Kennlinie und einer Pedalweg-Fahrzeug-Verzögerung-Kennlinie in der Rückfallebene der erfindungsgemäßen Bremsanlage.

Eine erfindungsgemäße Bremsanlage für Kraftfahrzeuge vom Typ "Brake-by-Wire" umfasst eine Betätigungseinheit mit einem mittels eines nicht gezeigten Bremspedals betätigbaren Hauptbremszylinder 1 mit einem Gehäuse 2 und einem in dem Gehäuse 2 verschiebbar angeordneten Kolben 3, welcher zusammen mit dem Gehäuse 2 einen Druckraum 4 begrenzt. An dem Hauptbremszylinder 1 bzw. an dem Druckraum 4 sind in bekannter Weise nicht dargestellte Radbremsen angeschlossen.

Weiter umfasst die Betätigungseinheit einen drucklosen Druckmittelvorratsbehälter 5 sowie einen mit dem Hauptbremszylinder 1 zusammenwirkenden hydraulisch betätigbaren Wegsimulator 22, welcher, insbesondere in einer Betriebsart "Brake-by-Wire", dem Fahrzeugführer ein angenehmes Pedalgefühl vermittelt.

Der Wegsimulator besteht im Wesentlichen aus einem mittels einer Feder 23 positionierten Simulatorkolben 24, der einerseits einen die Feder 23 aufnehmenden Simulatorraum 25 und andererseits eine mit dem Druckraum 4 des Hauptbremszylinders 1 in Verbindung stehende Simulatorkammer 26 begrenzt

Eine nicht dargestellte elektronischen Steuer- und Regeleinheit steuert oder regelt eine pneumatische, elektrische bzw. elektrohydraulische Druckbereitstellungseinheit zur Beaufschlagung der Radbremsen mit Druck und eine Druckregelventilanordnung zur Regelung und/oder Steuerung des an den Radbremsen eingesteuerten Radbremsdruckes.

Die grundsätzliche Funktion und der grundsätzliche Aufbau einer Bremsanlage für Kraftfahrzeuge vom Typ "Brake-by-Wire" sind bekannt, so dass auf eine dahingehende Beschreibung verzichtet wird. Im nachfolgenden wird daher lediglich auf die erfindungswesentlichen Merkmale eingegangen.

Bei Ausfall der by-Wire-Einheit bzw. der Elektrik / Elektronik wird das Fahrzeug durch den hydraulischen Druck abgebremst, den der Fahrzeugführer ausschließlich mit Muskelkraft im hydraulischen Hauptbremszylinder 1 (unverstärkte Rückfallebene) erzeugt. Ferner muss, wenn die Bremsanlage z.B. durch Ausfall der Fremdenergie in die muskelkraftbetriebene Rückfallebene wechselt, der Wegsimulator 23 von der Pedalbetätigung abgetrennt werden, denn der Volumenverbraucher "Wegsimulator" 23 führt sonst zu einem erheblich verlängerten Pedalweg und kann zu einer unzureichenden Fahrzeugverzögerung führen. Die Abschaltung des Wegsimulators 23 muss aus diesem Grund vom System selbst überwachbar sein.

Der vorliegenden Erfindung liegt daher die Aufgabe zugrunde, eine Bremsanlage für Kraftfahrzeuge vom Typ "Brake-by-Wire" bereitzustellen, die es ermöglicht, in der unverstärkten Rückfallebene trotz eines nicht abschaltbaren Wegsimulators und der gesetzlichen Pedalkraftlimitierung von 500N auch große und schwere Fahrzeuge mit einem ergonomisch optimierten Pedalweg bis zur gesetzlich vorgeschriebenen Vollverzögerung abbremsen zu können.

Der Kolben 3 des Hauptbremszylinders 1 ist daher erfindungsgemäß als Stufenkolben mit mindestens zwei unterschiedlich großen hydraulischen Wirkflächen A1, A2 ausgebildet ist. Dem Druckraum 4 ist eine erste, kleine Wirkfläche A1 und einem Füllraum 6 ist ein zweite, große Wirkfläche A2 zugeordnet.

Im Rahmen der Erfindung ist es denkbar, drei und mehr Stufen am Kolben 3 vorzusehen, so dass drei und mehr unterschiedlich große hydraulische Wirkflächen A1, A2, A3 bis An ausgebildet sind, welche registerartig nacheinander abgeschaltet werden.

Der Füllraum 6 steht in der Betriebsart "Brake-by-Wire" über eine Druckmittelleitung 27 mit einem Behälteranschluss 28 eines Druckmittelbehälters 5 und dadurch mit dem Wegsimulator 22 in Verbindung.

Die Druckmittelleitung 27 ist in der Betriebsart "Brake-by-Wire" mittels eines Ventils 29 absperrbar vorgesehen, welches beispielsweise als ein elektromagnetisch betätigbares, stromlos geschlossenes (SG-)2/2-Wegeventil ausgebildet ist. In der unverstärkten Rückfallebene sperrt das Ventil 29 also die Druckmittelleitung 27 zwischen dem Füllraum 6 und dem Wegsimulator 22.

Die Kolbenstufe mit einer größeren Wirkfläche A2 wird im Normalbetrieb, d.h. in der Betriebsart "Brake-by-Wire" stets mit dem Druckmittelbehälter 5 verbunden und ist somit im Normalbetrieb der Bremsanlage unwirksam, so dass in der Betriebsart "Brake-by-Wire" nur die erste, kleine Wirkfläche A1 wirksam ist. Diese sicherheitsrelevante Verbindung kann vom System bei jeder Pedalbetätigung auf ihre Funktionstüchtigkeit geprüft werden.

In der Rückfallebene wird diese Verbindung unterbrochen und der Hauptbremszylinder 1 arbeitet bis zu einem konstruktiv vorher bestimmten Umschaltpunkt mit der größeren Wirkfläche A2, wie nachstehend erläutert wird. Im Umschaltpunkt, beim Erreichen des Umschaltdruckes wird die große Wirkfläche A2 wieder mit dem Druckmittelbehälter 5 verbunden und der weitere Druckaufbau wird nur über die kleinere Wirkfläche A1 fortgesetzt.

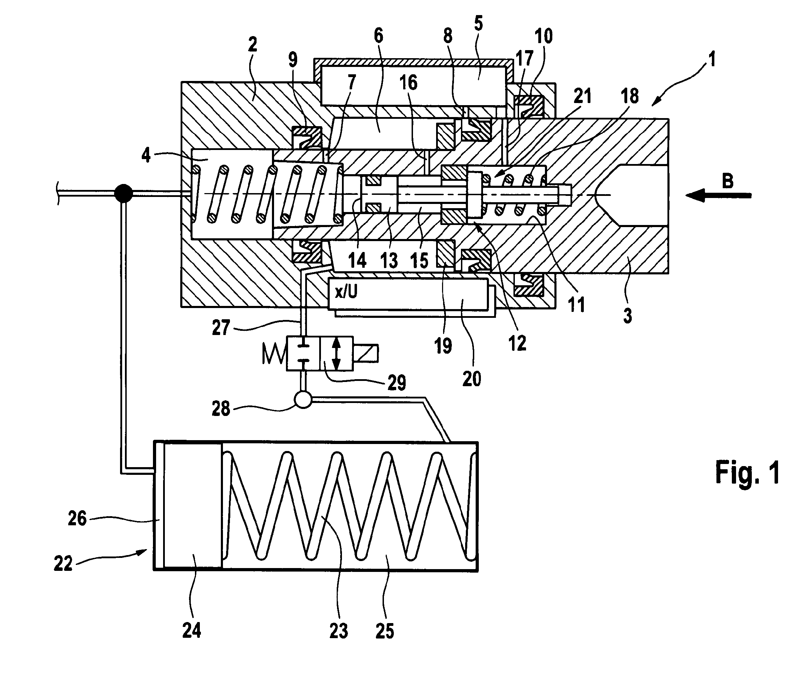

Fig. 1 zeigt den Hauptbremszylinder 1 in einer unbetätigten Stellung in der Rückfallebene, in welcher das Ventil 29 geschlossen ist. Beide Räume 4,6 sind mit dem drucklosen Druckmittelbehälter 5 verbunden. Wie aus Fig. 1 ersichtlich ist, weist der Kolben 3 in einem Bereich der ersten, kleinen Wirkfläche A1 eine (oder mehrere) erste Verbindungsbohrung 7 auf, welche den Druckraum 4 mit dem Füllraum 6 in der unbetätigten Stellung verbindet. Gleichzeitig ist der Füllraum 6 über eine Verbindungsleitung 8 mit dem Druckmittelbehälter 5 verbunden. Wird der Kolben 3 durch eine Betätigung des Bremspedals in Betätigungsrichtung B verschoben, werden die Verbindungsbohrungen 7 und die Verbindungsleitung 8 durch Überfahren von Dichtmanschetten 9,10 unterbrochen und es kann im Druckraum 4 ein hydraulischer Druck aufgebaut werden. Nach Überwindung eines Schließweges ist somit die zweite, große hydraulische Wirkfläche A2 wirksam. So kann die Bremsanlage über einen kurzen Pedalweg gefüllt und eine Fahrzeugverzögerung von rund 0,3g erreicht werden und die vom Fahrzeugführer eingebrachte Betätigungskraft wird direkt und verlustfrei zum Druckaufbau in den Bremskreisen verwendet.

Die Umschaltung der Wirkflächen von A2 zu A1 erfolgt in Abhängigkeit von einem hydraulischen Druck in dem Druckraum 4 bzw. von der Pedalkraft.

Hierzu ist eine Ventilanordnung 21 vorgesehen, die in einer Zentralbohrung 11 des Kolbens 3 angeordnet ist. Die Ventilanordnung 21 umfasst, wie aus Fig. 1 ersichtlich ist, ein Zentralventil 12 mit einem Schaltkolben 13, wobei der Schaltkolben 13 an seiner Stirnfläche 14 mit dem Druck des Druckraumes 4 beaufschlagt ist. Weiter begrenzt der Schaltkolben 13 eine Schaltkammer 15, welche über eine zweite in dem Kolben 3 ausgebildete Verbindungsbohrung 16 mit dem Füllraum 6 in Verbindung steht.

Wird der Schaltkolben 13 durch den Druck in dem Druckraum 4 gegen den Druck einer Schaltfeder 18 entgegen der Betätigungsrichtung B in der Zeichnung nach rechts verschoben, öffnet sich das Zentralventil 12 und verbindet die Schaltkammer 15 über eine dritte im Kolben 3 ausgebildete Verbindungsbohrung 17 mit dem Druckmittelbehälter 5, so dass nur noch die erste, kleine hydraulische Wirkfläche A1 des Kolbens 3 wirksam ist.

Nach Erreichen einer Fahrzeugverzögerung von rund 0,3g wird damit die wirksame Fläche des Hauptbremszylinders 1 auf die kleinere Wirkfläche A1 umgeschaltet. Dies ermöglicht dem Fahrzeugführer, über die kleine Wirkfläche A1 des Kolbens 3 mit der gesetzlich erlaubten 500N Pedalkraft je nach Bremsanlage und Masse des Fahrzeuges eine Abbremsung bis zur Blockiergrenze zu erreichen. Dabei kann der Pedalweg im ergonomisch optimalen Bereich bis 100mm gehalten werden.

Damit wird nach Überwindung des Schließweges am Kolben 3 sofort und stetig Bremsdruck in den Radbremskreisen aufgebaut. Die vom Fahrzeugführer eingebrachte Betätigungskraft wird direkt und verlustfrei zum Druckaufbau in den Bremskreisen verwendet.

Sind drei und mehr Wirkflächen A1 bis An am Kolben 3 vorgesehen, ist es denkbar die Ventilanordnungen auch in parallel zur Zentralbohrung 11 ausgeführten Bohrungen anzuordnen mit Verbindung jeweils zum kleinsten Druckraum 4 und zum Druckmittelbehälter 5.

Zur Erfassung des Betätigungsweges des Hauptbremszylinders 1 ist eine Sensorvorrichtung zur Erfassung von Bewegung und Position des Kolbens 3 vorgesehen, welche mit der elektronischen Steuer- und Regeleinheit verbindbar ist. Wie aus Fig. 1 ersichtlich ist, ist an dem Kolben 3 ein Signalgeber 19 beispielsweise in Form eines Magneten angeordnet und ein Sensorelement 20 ist ortsfest an dem Gehäuse 2 befestigt. Mit Hilfe der Sensorvorrichtung ist es möglich, den Weg des Kolbens 3 zu sensieren und eine Fahrerwunscherkennung bzw. eine Sollwertgenerierung zu realisieren.

Vorteilhafterweise kann der Druckmittelbehälter 5 in das Gehäuse 2 des Hauptbremszylinders 1 integriert vorgesehen sein.

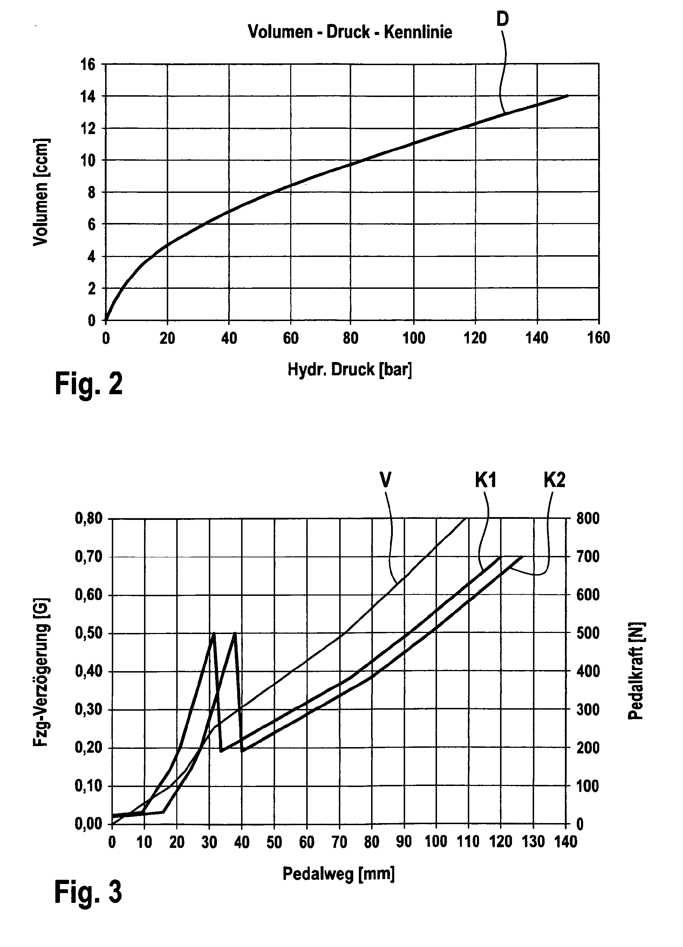

Fig. 2 zeigt eine beispielhafte Darstellung einer Volumen-Druck-Kennlinie D der erfindungsgemäßen Bremsanlage. Aus Fig. 3 ist ferner eine beispielhafte Darstellung einer Pedalweg-Pedalkraft-Kennlinie K und einer Pedalweg-Fahrzeug-Verzögerung-Kennlinie V in der Rückfallebene der erfindungsgemäßen Bremsanlage zu entnehmen. Dabei zeigt die Kennlinie K1 die Pedalcharakteristik ohne Wegsimulator 22 und die Kennlinie K2 die Pedalcharakteristik mit Wegsimulator 22.

### Bezugszeichenliste

- 1: Hauptbremszylinder
- 2: Gehäuse
- 3: Kolben
- 4: Druckraum
- 5: Druckmittelbehälter
- 6: Füllraum
- 7: Verbindungsbohrung
- 8: Verbindungsleitung
- 9: Dichtmanschette
- 10: Dichtmanschette
- 11: Zentralbohrung
- 12: Zentralventil
- 13: Schaltkolben
- 14: Stirnfläche
- 15: Schaltkammer
- 16: Verbindungsbohrung
- 17: Verbindungsbohrung
- 18: Schaltfeder
- 19: Signalgeber
- 20: Sensorelement
- 21: Ventilanordnung
- 22: Wegsimulator
- 23: Feder
- 24: Simulatorkolben
- 25: Simulatorraum
- 26: Simulatorkammer
- 27: Druckmittelleitung
- 28: Behälteranschluss
- 29: Ventil
- B: Betätigungsrichtung
- D: Volumen-Druck-Kennlinie
- K: Pedalweg-Pedalkraft-Kennlinie
- V: Pedalweg-Fahrzeug-Verzögerung-Kennlinie

## Patentansprüche

1. Bremsanlage für Kraftfahrzeuge vom Typ "Brake-by-Wire" mit
einer Betätigungseinheit umfassend einen mittels eines Bremspedals betätigbaren Hauptbremszylinder (1) mit einem Gehäuse (2) und einem in dem Gehäuse (2) verschiebbar angeordneten Kolben (3), welcher zusammen mit dem Gehäuse (2) einen Druckraum (4) begrenzt, an dem Radbremsen angeschlossen sind, einen drucklosen Druckmittelvorratsbehälter (5), einem mit dem Hauptbremszylinder (1) zusammenwirkenden hydraulisch betätigbaren Wegsimulator (22) mit einem mittels einer Feder (23) positionierten Simulatorkolben (24), der einerseits einen die Feder (23) aufnehmenden Simulatorraum (25) und andererseits eine mit dem Druckraum (4) des Hauptbremszylinders (1) in Verbindung stehende Simulatorkammer (26) begrenzt, wobei der Wegsimulator (22), insbesondere in einer Betriebsart "Brake-by-Wire", dem Fahrzeugführer ein angenehmes Pedalgefühl vermittelt, wobei der Hauptbremszylinder (1) in einer Rückfallebene durch den Fahrzeugführer rein muskelkraftbetrieben betätigt ist,
einer elektrisch steuerbaren, pneumatischen, elektrischen bzw. elektrohydraulischen Druckbereitstellungseinheit zur Beaufschlagung der Radbremsen mit Druck, einer Druckregelventilanordnung zur Regelung und/oder Steuerung eines an einer Radbremse eingesteuerten Radbremsdruckes
und einer elektronischen Steuer- und Regeleinheit, welche die Betätigungseinheit und/oder die Druckregelventilanordnung steuert oder regelt, **dadurch gekennzeichnet, dass** der Kolben (3) des Hauptbremszylinders (1) als Stufenkolben mit mindestens zwei unterschiedlich großen hydraulischen Wirkflächen (A1, A2) ausgebildet ist, wobei dem Druckraum (4) eine erste, kleine Wirkfläche (A1) und einem Füllraum (6) ein zweite, große Wirkfläche (A2) zugeordnet ist, und wobei der Füllraum (6) in der Betriebsart "Brake-by-Wire" über eine Druckmittelleitung (27) mit dem Druckmittelbehälter (5) in Verbindung steht, so dass in der Betriebsart "Brake-by-Wire" die erste, kleine Wirkfläche (A1) wirksam ist, und in der Rückfallebene nach Überwindung eines Schließweges die zweite, große hydraulische Wirkfläche (A2) wirksam ist und eine Umschaltung der Wirkflächen (A2, A1) in Abhängigkeit von einem hydraulischen Druck in dem Druckraum (4) bzw. der Pedalkraft erfolgt.

2. Bremsanlage nach Anspruch 1, **dadurch gekennzeichnet, dass** die Druckmittelleitung (27) zwischen dem Füllraum (6) und dem Druckmittelbehälter (5) absperrbar vorgesehen ist.

3. Bremsanlage nach Anspruch 2, **dadurch gekennzeichnet, dass** zur Absperrung der Druckmittelleitung (27) in der Betriebsart "Brake-by-Wire" ein Ventil (29) in der Druckmittelleitung (27) angeordnet ist.

4. Bremsanlage nach einem der Ansprüche 1 bis 3, **dadurch gekennzeichnet, dass** die Umschaltung der Wirkflächen (A2, A1) in der Rückfallebene mittels einer Ventilanordnung (21) erfolgt.

5. Bremsanlage nach Anspruch 4, **dadurch gekennzeichnet, dass** die Ventilanordnung (21) ein in einer Zentralbohrung (11) des Kolbens (3) angeordnetes Zentralventil (12) mit einem Schaltkolben (13) aufweist, wobei der Schaltkolben (13) mit dem Druck des Druckraumes (4) beaufschlagt ist und welcher eine mit dem Füllraum (6) in Verbindung stehende Schaltkammer (15) begrenzt, welche in einer Öffnungsstellung des Zentralventils (12) mit dem Druckmittelbehälter (5) verbunden ist.

6. Bremsanlage nach Anspruch 5, **dadurch gekennzeichnet, dass** der Hauptbremszylinder (1) eine Sensorvorrichtung zur Erfassung von Bewegung und Position des Kolbens (3) aufweist, wobei an dem Kolben (3) ein Signalgeber (19) angeordnet ist und ein Sensorelement (20) an dem Gehäuse befestigt ist.

7. Bremsanlage nach einem der Ansprüche 1 bis 6, **dadurch gekennzeichnet, dass** der Druckmittelbehälter (5) in das Gehäuse (2) des Hauptbremszylinders (1) integriert vorgesehen ist.

## Claims

1. Brake system for motor vehicles of the "brake-by-wire" type having
an activation unit comprising a master brake cylinder (1) which can be activated by means of a brake pedal and has a housing (2) and a piston (3) which is displaceably arranged in the housing (2) and together with the housing (2) bounds a pressure space (4) to which wheel brakes are connected, a pressureless pressure medium reservoir container (5), a travel simulator (22) which can be activated hydraulically and, interacts with the master brake cylinder (1) and has a simulator piston (24) which is positioned by means of a spring (23) and bounds, on the one hand, a simulator space (25) which accommodates the spring (23) and, on the other hand, a simulator chamber (26) which is connected to the pressure space (4) of the master brake cylinder (1), wherein the travel simulator (22) provides the vehicle driver with a pleasant pedal sensation, in particular in a "brake-by-wire" operating mode, wherein in a fall back level the master brake cylinder (1) is activated by the vehicle driver in a purely muscle-force-operated fashion,
an electrically controllable, pneumatic electrical or electrohydraulic pressure supply unit for applying pressure to the wheel brakes, a pressure control valve arrangement for performing closed-loop and/or open-loop control of a wheel brake pressure which is applied to a wheel brake,
and an electronic open-loop and closed-loop control unit which performs open-loop or closed-loop control of the activation unit and/or of the pressure control valve arrangement, **characterized in that** the piston (3) of the master brake cylinder (1) is embodied as a stepped piston with at least two hydraulic active faces (A1, A2) of different sizes, wherein a first small active face (A1) is assigned to the pressure space (4), and a second large active face (A2) is assigned to a filling space (6), and wherein in the "brake-by-wire" operating mode the filling space (6) is connected to the pressure medium container (5) via a pressure medium line (27), with the result that in the "brake-by-wire" operating mode the first small active face (A1) is active, and in the fall back level the second large hydraulic active face (A2) is active after a closing travel has been overcome and shifting over of the active faces (A2, A1) takes place as a function of a hydraulic pressure in the pressure space (4) or the pedal force.

2. Brake system according to Claim 1, **characterized in that** the pressure medium line (27) between the filling space (6) and the pressure medium container (5) is provided in such a way that it can be shut off.

3. Brake system according to Claim 2, **characterized in that** a valve (29) is arranged in the pressure medium line (27) for shutting off the pressure medium line (27) in the "brake-by-wire" operating mode.

4. Brake system according to one of Claims 1 to 3, **characterized in that** the shifting over of the active faces (A2, A1) in the fall back level takes place by means of a valve arrangement (21).

5. Brake system according to Claim 4, **characterized in that** the valve arrangement (21) has a central valve (12) which is arranged in a central bore (11) of the piston (3) and has a shifting piston (13) wherein the shifting piston (13) has the pressure of the pressure space (4) applied to it and bounds a shifting chamber (15) which is connected to the filling space (6) and is connected in an open position of the central valve (12) to the pressure medium container (5).

6. Brake system according to Claim 5, **characterized in that** the master brake cylinder (1) has a sensor device for detecting the movement and position of the piston (3), wherein a signal transmitter (19) is arranged on the piston (3), and a sensor element (20) is attached to the housing.

7. Brake system according to one of Claims 1 to 6, **characterized in that** the pressure medium container (5) is provided integrated into the housing (2) of the master brake cylinder (1).

## Revendications

1. Système de freinage pour véhicules automobiles du type "frein par câble" ("Brake-by-Wire"), comprenant
une unité d'actionnement comprenant un cylindre de frein principal (1) pouvant être actionné au moyen d'une pédale de frein avec un boîtier (2) et un piston (3) disposé de manière à pouvoir coulisser dans le boîtier (2), lequel piston délimite, conjointement avec le boîtier (2), un espace de pression (4), au niveau duquel sont raccordés des freins de roue, un réservoir de fluide sous pression (5) non soumis à pression, un simulateur de course (22) à commande hydraulique coopérant avec le cylindre de frein principal (1) avec un piston de simulateur (24) positionné au moyen d'un ressort (23), qui limite d'une part un espace de simulateur (25) recevant le ressort (23) et d'autre part une chambre de simulateur (26) en liaison avec l'espace de pression (4) du cylindre de frein principal (1), le simulateur de course (22), en particulier dans un mode de fonctionnement "Brake-by-Wire", transmettant au conducteur du véhicule une sensation de pédale agréable, le cylindre de frein principal (1) étant commandé uniquement de manière entraînée par la force musculaire par le conducteur du véhicule dans le cas du mode de repli,
une unité d'alimentation en pression pneumatique, électrique ou électrohydraulique, à commande électrique, pour solliciter les freins de roue en pression,
un système de soupape de régulation de la pression pour réguler et/ou commander une pression de frein de roue commandée au niveau d'un frein de roue,
et une unité de commande et de régulation électronique, qui commande ou régule l'unité d'actionnement et/ou le système de soupape de régulation de la pression, **caractérisé en ce que** le piston (3) du cylindre de frein principal (1) est réalisé sous forme de piston étagé avec au moins deux surfaces fonctionnelles hydrauliques de tailles différentes (A1, A2), l'espace de pression (4) étant associé à une première petite surface fonctionnelle (A1) et un espace de remplissage (6) étant associé à une deuxième grande surface fonctionnelle (A2), et l'espace de remplissage (6) étant en liaison, dans le mode de fonctionnement "Brake-by-Wire" par le biais d'une conduite de fluide sous pression (27), avec le réservoir de fluide sous pression (5), de telle sorte que dans le mode de fonctionnement "Brake-by-Wire", la première petite surface fonctionnelle (A1) soit active, et que dans le cas du mode de repli, après avoir surmonté une course de fermeture, la deuxième grande surface fonctionnelle hydraulique (A2) soit active, et une commutation des surfaces fonctionnelles (A2, A1) se produise en fonction d'une pression hydraulique dans l'espace de pression (4) ou en fonction de la force sur la pédale.

2. Système de freinage selon la revendication 1, **caractérisé en ce que** la conduite de fluide sous pression (27) est prévue de manière à pouvoir être bloquée entre l'espace de remplissage (6) et le réservoir de fluide sous pression (5).

3. Système de freinage selon la revendication 2, **caractérisé en ce que** pour le blocage de la conduite de fluide sous pression (27) dans le mode de fonctionnement "Brake-by-Wire", une soupape (29) est disposée dans la conduite de fluide sous pression (27).

4. Système de freinage selon l'une quelconque des revendications 1 à 3, **caractérisé en ce que** la commutation des surfaces fonctionnelles (A2, A1) se produit dans le cas du mode de repli au moyen d'un système de soupape (21).

5. Système de freinage selon la revendication 4, **caractérisé en ce que** le système de soupape (21) présente une soupape centrale (12) disposée dans un alésage central (11) du piston (3) avec un piston de commutation (13), le piston de commutation (13) étant sollicité avec la pression de l'espace de pression (4) et limitant une chambre de commutation (15) en liaison avec l'espace de remplissage (6), laquelle est connectée dans une position d'ouverture de la soupape centrale (12) au réservoir de fluide sous pression (5).

6. Système de freinage selon la revendication 5, **caractérisé en ce que** le cylindre de frein principal (1) présente un dispositif de capteur pour détecter le mouvement et la position du piston (3), un détecteur de signaux (19) étant disposé au niveau du piston (3) et un élément de capteur (20) étant fixé sur le boîtier.

7. Système de freinage selon l'une quelconque des revendications 1 à 6, **caractérisé en ce que** le réservoir de fluide sous pression (5) est prévu de manière intégrée dans le boîtier (2) du cylindre de frein principal (1).
